# EUROPEAN PATENT SPECIFICATION

(11) **EP 3 659 778 B1**
(45) Date of publication and mention of the grant of the patent: **05.05.2021**
(21) Application number: 19211682.0
(22) Date of filing: 27.11.2019
(51) Int. Cl.: B29C 45/76, G05B 19/418

(54) **INJECTION MOLDING MACHINE SYSTEM**
SPRITZGIESSMASCHINE-SYSTEM
SYSTÈME DE MACHINE DE MOULAGE PAR INJECTION

(30) Priority: 30.11.2018 JP 2018225807
(43) Date of publication of application: 03.06.2020
(73) Proprietor: Sumitomo Heavy Industries, Ltd., Tokyo 141-6025 (JP)
(72) Inventor: MATSUNAGA, Takuya, Chiba, 263-0001 (JP); AMANO, Mitsuaki, Chiba, 263-0001 (JP); ISHII, Yoshihisa, Chiba, 263-0001 (JP); ISHIKAWA, Sosuke, Chiba, 263-0001 (JP)
(74) Representative: Louis Pöhlau Lohrentz

(56) References cited:
- US-A1- 2017 243 135
- US-A1- 2017 343 994
- US-B2- 9 971 329

## Description

### BACKGROUND OF THE INVENTION

### Field of the Invention

The present invention relates tc an injection molding machine system.

### Description of Related Art

Japanese Unexamined Patent Publication No. 2005-25449 discloses a production management system that manages aplurality of injection molding machines, incorporates information from peripheral apparatuses such as a molding product ejector or a molding product inspector, and performs production management. United States Unexamined Patent Publication No. 2017/243135 discloses a machine learning device which performs a task using a plurality of industrial machines and learns task sharing for the plurality of industrial machines. United States Patent No. 9971329 discloses a cell control system including a communication device for communicating with a manufacturing cell including a plurality of manufacturing machines configured to manufacture a product. United States Unexamined Patent Publication No. 2017/343994 discloses a manufacturing management device which includes a first cell planning device connected to a manufacturing machine of a first manufacturing cell, and a second cell planning device connected to a manufacturing machine of a second manufacturing cell.

### SUMMARY OF THE INVENTION

Meanwhile, a single molding product is produced by a molding cell including a plurality of injection molding machines. In the molding cell, the number of molding products produced by each injection molding machine is separately set by, for example, a worker.

Therefore, an object of the present invention is to provide an injection molding machine system that manages production in an injection molding machine.

According to an aspect of the present invention, there is provided an injection molding machine system having a molding cell including a plurality of injection molding machines, the injection molding machine system including a total production number input portion configured to receive input of a total production number of molding products to be produced by the molding cell; a production number setting portion configured to set a production number of molding products in each of the injection molding machines on the basis of the total production number; a state determinationportion configured to determine a state of the injection molding machine; and an operation control portion configured to control an operation of the injection molding machine, in which the production number setting portion is configured to set a production number of molding products in each of the injection molding machines on the basis of the state of the injection molding machine, the production number setting portion is configured to reset a production number of molding products in each of the injection molding machines in a case where the state determination portion determines that a state of at least one injection molding machine among the plurality of injection molding machines is changed, and the operation control portion is configured to perform a cycle reduction process of controlling the injection molding machine such that a time required for one molding cycle is shorter than before the injection molding machine is stopped in a case where a production number after resetting is greater than a production number before resetting.

According to another aspect of the present invention, there is provided an injection molding machine system having a molding cell including a plurality of injection molding machines, the injection molding machine system including a total production number input portion configured to receive input of a total production number of molding products to be produced by the molding cell; a production number setting portion configured to set a production number of molding products in each of the injection molding machines on the basis of the total production number; and a state determination portion configured to determine a state of the injection molding machine, in which the production number setting portion (75) is configured to set a production number of molding products in each of the injection molding machines (11, 12, 13) on the basis of the state of the injection molding machine (11, 12, 13), and the production number setting portion is configured to set a production number of molding products in each of the injection molding machines such that a production completion timing in one injection molding machine is different from a production completion timing in another injection molding machine.

According to the present invention, it is possible to provide an injection molding machine system managing production in an injection molding machine.

### BRIEF DESCRIPTION OF THE DRAWINGS

Fig. 1 is a diagram illustrating a configuration of an injection molding machine system according to an embodiment.
Fig. 2 is a functional block diagram of the injection molding machine system according to the embodiment.
Fig. 3 illustrates an example of a time chart for an injection molding machine system related to a reference example.
Figs. 4A to 4C illustrate an example of a time chart for the injection molding machine system according to the embodiment.
Fig. 5 illustrates another example of a time chart for the injection molding machine system related to a reference example.
Fig. 6 illustrates another example of a time chart for the injection molding machine system according to the embodiment.
Figs. 7A to 7F illustrate other examples of a time chart and for the injection molding machine system according to the embodiment and a graph representing a change of a production number therein.

### DETAILED DESCRIPTION OF THE INVENTION

Hereinafter, an embodiment of the present invention will be described with reference to the drawings. Throughout the drawings, an identical or corresponding constituent element will be given an identical or corresponding reference numeral, and description thereof will be omitted.

### <Injection Molding Machine System>

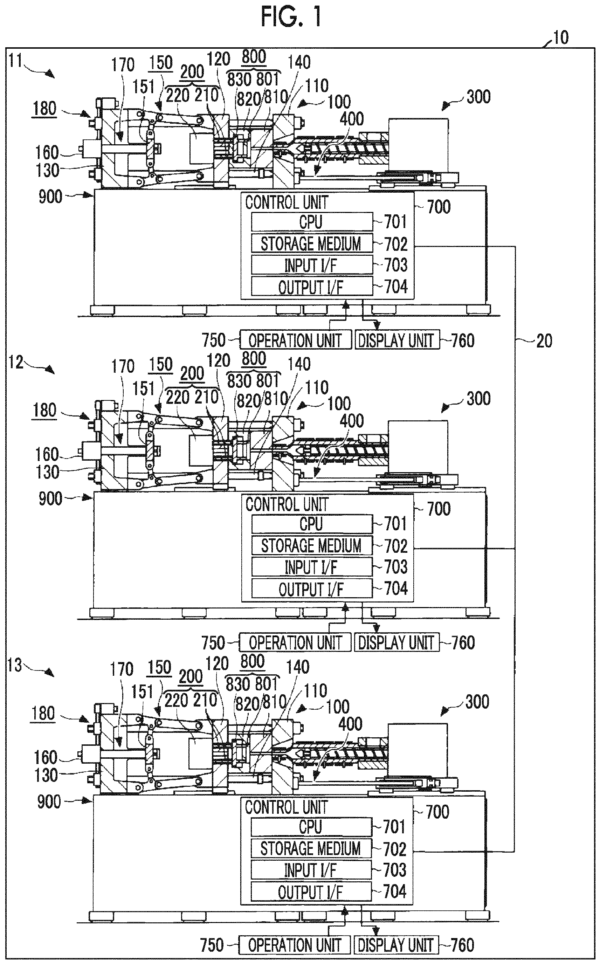

With reference to Fig. 1, an injection molding machine system 1 according to an embodiment will be described. Fig. 1 is a diagram illustrating a configuration of the injection molding machine system 1 according to an embodiment.

The injection molding machine system 1 has a molding cell 10 including a plurality of injection molding machines 11 to 13. In the example illustrated in Fig. 1, the molding cell 10 includes three injection molding machines 11 to 13. Each of the injection molding machines 11 to 13 of the molding cell 10 molds a single molding product. The injection molding machines 11 to 13 of the molding cell 10 are coupled to each other via a network 20.

### <Injection Molding Machine>

Here, the injection molding machines 11 to 13 will be described. The injection molding machines 11 to 13 have the same configuration. Thus, the injection molding machine 11 will be described, and repeated description of the injection molding machines 12 and 13 will be omitted.

The injection molding machine 11 includes a mold clamping unit 100, an ejector unit 200, an injection unit 300, a movement unit 400, a control unit 700, and a frame 900. The control unit 700 is disposed in an internal space of the frame 900. Hereinafter, each constituent element of the injection molding machine 11 will be described.

### (Mold clamping unit)

The mold clamping unit 100 performs mold closing, pressure increase, mold clamping, pressure release, and mold opening on a mold unit 800. The mold unit 800 includes a stationary mold 810 and a movable mold 820. The mold clamping unit 100 is, for example, of a lateral type, and a mold opening/closing direction is a horizontal direction. The mold clamping unit 100 includes a stationary platen 110, a movable platen 120, a toggle support 130, a tie bar 140, a toggle mechanism 150, a mold clamping motor 160, a motion conversion mechanism 170, and a mold thickness adjustment mechanism 180.

The stationary platen 110 is fixed to the frame 900. The stationary mold 810 is attached to a surface of the stationary platen 110 facing the movable platen 120. The movable platen 120 is disposed on the frame 900 to be movable in the mold opening/closing direction. The movable mold 820 is attached to a surface of the movable platen 120 facing the stationary platen 110. The movable platen 120 advances and retreats with respect to the stationary platen 110, and thus mold closing, pressure increase, mold clamping, pressure release, and mold opening is performed on the mold unit 800. The toggle support 130 is disposed with a gap from the stationary platen 110, and is mounted on the frame 900 to be movable in the mold opening/closing direction. The tie bar 140 connects the stationary platen 110 and the toggle support 130 to each other with a gap in the mold opening/closing direction.

The toggle mechanism 150 is disposed between the movable platen 120 and the toggle support 130, and moves the movable platen 120 in the mold opening/closing direction with respect to the toggle support 130. The toggle mechanism 150 is formed of a cross head 151, a pair of link groups, and the like. In a case where the cross head 151 advances and retreats with respect to the toggle support 130, the link groups are bent and stretched, and thus the movable platen 120 advances and retreats with respect to the toggle support 130. The mold clamping motor 160 is provided at the toggle support 130, and operates the toggle mechanism 150. The motion conversion mechanism 170 converts rotary motion of the mold clamping motor 160 into linear motion of the cross head 151, and thus operates the toggle mechanism 150.

The mold clamping unit 100 performs a mold closing process, a pressure increase process, a mold clamping process, a pressure release process, and a mold opening process under the control of the control unit 700.

In the mold closing process, the mold clamping motor 160 is driven such that the cross head 151 advances to a mold closing completion position at a set movement speed. Therefore, the movable platen 120 advances such that the movable mold 820 touches the stationary mold 810.

In the pressure increase process, the mold clamping motor 160 is further driven such that the cross head 151 is moved from the mold closing completion position to a mold closing position, and thus mold clamping force is caused.

In the mold clamping process, the mold clamping motor 160 is driven such that the cross head 151 is maintained at the mold clamping position. In the mold clamping process, the mold clamping force caused in the pressure increase process is maintained. In the mold clamping process, a cavity space 801 is formed between the movable mold 820 and the stationary mold 810, and the injection unit 300 fills the cavity space 801 with a liquid molding material. The applied molding material is solidified, and thus a molding product is obtained.

In the pressure release process, the mold clamping motor 160 is driven such that the cross head 151 retreats from the mold clamping position to a mold opening start position. Therefore, the movable platen 120 retreats, and thus the mold clamping force is reduced. The mold opening start position and the mold closing completion position may be the same position.

In the mold opening process, the mold clamping motor 160 is driven such that the cross head 151 retreats from the mold opening start position to a mold opening completion position at a set movement speed. Therefore, the movable platen 120 retreats such that the movable mold 820 is separated from the stationary mold 810. Thereafter, the ejector unit 200 ejects a molding product from the movable mold 820.

In a case where a thickness of the mold unit 800 changes due to replacement of the mold unit 800 or a temperature change of the mold unit 800, a mold thickness is adjusted such that predetermined mold clamping force is obtained. The mold thickness adjustment mechanism 180 adjusts a mold thickness by adjusting a gap between the stationary platen 110 and the toggle support 130. Regarding a timing of mold thickness adjustment, the mold thickness is adjusted, for example, between ending of a molding cycle end and starting of the next molding cycle.

### (Ejector unit)

The ejector unit 200 is attached to the movable platen 120, and advances and retreats along with the movable platen 120. The ejector unit 200 performs an ejection process under the control of the control unit 700. In the ejection process, a drive mechanism 220 causes an ejector rod 210 to advance from a standby position to an ejection position at a set movement speed such that a movable member 830 advances, and thus a molding product is ejected. Thereafter, the drive mechanism 220 causes the ejector rod 210 to retreat at a set movement speed, and thus the movable member 830 retreats to the original standby position.

### (Injection unit)

The injection unit 300 is disposed to be able of advance to retreat with respect to the mold unit 800. The injection unit 300 touches the mold unit 800, and thus fills the cavity space 801 in the mold unit 800 with a molding material. The injection unit 300 performs a plasticizing process, a filling process, and a pressure holding process under the control of the control unit 700. The filling process and the pressure holding process will also be collectively referred to as an injection process. In the plasticizing process, a predetermined amount of a liquid molding material is accumulated. In the filling process, the cavity space 801 in the mold unit 800 is filled with the liquid molding material accumulated in the plasticizing process. In the pressure holding process, a held pressure of the molding material is maintained to be a set pressure.

### (Movement unit)

The movement unit 400 causes the injection unit 300 to advance and retreat with respect to the mold unit 800.

### (Control unit)

The control unit 700 is configured by, for example, a computer, and includes, as illustrated in Fig. 1, a central processing unit (CPU) 701, a storage medium 702 such as a memory, an input interface 703, and an output interface 704. The control unit 700 causes a program stored in the storage medium 702 to be executed by the CPU 701, and thus performs various control operations. The control unit 700 receives a signal from the outside via the input interface 703, and transmits a signal to the outside via the output interface 704.

The control unit 700 repeatedly performs a plasticizing process, a mold closing process, a pressure increase process, a mold clamping process, a filling process, a pressure holding process, a cooling process, a pressure release process, a mold opening process, and an ejection process, and thus repeatedly manufactures molding products. A series of operations for obtaining a molding product, for example, operations from starting of a plasticizing process to starting of the next plasticizing process will be referred to as a "shot" or a "molding cycle". A time required for a single shot will be referred to as a "molding cycle time" or a "cycle time".

One molding cycle includes, for example, the plasticizing process, the mold closing process, the pressure increase process, the mold clamping process, the filling process, the pressure holding process, the cooling process, the pressure release process, the mold opening process, and the ejection process in this order . The order here is an order of starting of each process. The filling process, the pressure holding process, and the cooling process are performed during the mold clamping process. Starting of the mold clamping process may match starting of the filling process. Ending of the pressure release process matches starting of the mold opening process.

A plurality of processes may be simultaneously performed in order to reduce a molding cycle time.

One molding cycle may include processes other than the plasticizing process, the mold closing process, the pressure increase process, the mold clamping process, the filling process, the pressure holding process, the cooling process, the pressure release process, the mold opening process, and the ejection process.

The control unit 700 is coupled to an operation unit 750 or a display unit 760. The operation unit 750 receives an input operation from a user, and outputs a signal corresponding to the input operation to the control unit 700. The display unit 760 displays a display screen corresponding to an input operation on the operation unit 750 under the control of the control unit 700.

The display screen is used to set the injection molding machine 11. A plurality of the display screens are prepared, and are displayed in a switching or overlapping manner. The user operates the operation unit 750 while viewing a display screen displayed on the display unit 760, and thus sets (including inputting of a setting value) the injection molding machine 11.

The operation unit 750 and the display unit 760 may be formed of, for example, a touch panel to be integrated with each other. The operation unit 750 and the display unit 760 of the present embodiment are integrated with each other, but may be provided separately from each other. The operation unit 750 may be provided in a plurality.

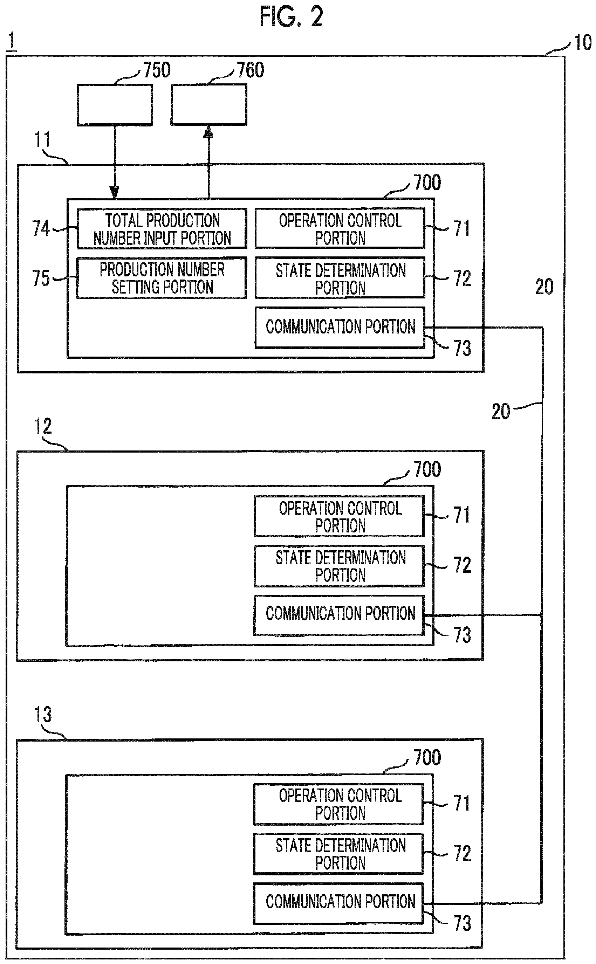

Next, the injection molding machine system 1 according to the embodiment will be described in more detail with reference to Fig. 2. Fig. 2 is a functional block diagram of the injection molding machine system 1 according to the embodiment.

The control unit 700 of each of the injection molding machines 11 to 13 has an operation control portion 71, a state determination portion 72, and a communication portion 73. The molding cell 10 has a master-slave configuration in which the injection molding machine 11 is used as a master, and the injection molding machines 12 and 13 are used as slaves. In other words, the control unit 700 of the injection molding machine 11 sets a production number of molding products in each of the injection molding machines 11 to 13. The control unit 700 of the injection molding machine 11 that is a master further includes a total production number input portion 74 and a production number setting portion 75. The operation control portion 71, the state determination portion 72, the total production number input portion 74, and the production number setting portion 75 are realized by the CPU 701 in Fig. 1 executing the program stored in the storage medium 702. The communication portion 73 includes, for example, the input interface 703 and the output interface 704 illustrated in Fig. 1.

The injection molding machine system 1 has a master-slave configuration in which the injection molding machine 11 is used as a master, and the injection molding machines 12 and 13 are used as slaves, but is not limited thereto. For example, the injection molding machine system 1 may have a configuration in which the molding cell 10 includes a host management device and a plurality of injection molding machines 11 to 13, and the host management device has the functions of the total production number input portion 74 and the production number setting portion 75.

The operation control portion 71 controls the mold clamping unit 100, the ejector unit 200, the injection unit 300, and the movement unit 400 provided in the injection molding machine thereof, and controls an operation of each process such as the plasticizing process, the mold closing process, the pressure increase process, the mold clamping process, the filling process, the pressure holding process, the cooling process, the pressure release process, the mold opening process, and the ejection process.

The state determination portion 72 determines a state of the injection molding machine thereof on the basis of information from various sensors provided in the injection molding machine thereof. State information of the injection molding machine determined by the state determination portion 72 is transmitted to the production number setting portion 75 of the injection moldingmachine 11. As the transmitted state information, a state of a corresponding injection molding machine is transmitted. Here, the state of the injection molding machine indicates an operation state, a production state, and a machine state. The operation state of the injection molding machine indicates, for example, during an operation, stoppage due to production number non-achievement resulting from a failure, and stoppage due to production number achievement. The production state of the injection molding machine indicates, for example, a production number of molding products and a yield (non-defective product ratio) of molding products. The production number of molding products indicates, for example, the number of completed molding products, the number of uncompleted molding products, and the like. The machine state of the injection molding machine indicates, for example, a residual life of the injection molding machine (for example, a residual life of a constituent component) . The state information may be transmitted at all times from the state determination portion 72 to the production number setting portion 75, may be transmitted when an operation state of the injection molding machine changes, and may be transmitted in response to a request from the production number setting portion 75.

The communication portion 73 communicably couples the control units 700 of the injection molding machines 11 to 13 to each other via the network 20.

The total production number input portion 74 displays an input screen for inputting a total production number of molding products to be produced by the molding cell 10, on the display unit 760. A worker operates the operation unit 750 and inputs a total production number while referring to the input screen displayed on the display unit 760. The total production number that is input via the operation unit 750 is input to the total production number input portion 74. The total production number input portion 74 transmits the input total production number to the production number setting portion 75.

The production number setting portion 75 sets a production number of molding products in each of the injection molding machines 11 to 13. Here, state information of each of the injection molding machines 11 to 13 is input to the production number setting portion 75 from the state determination portion 72 of each of the injection molding machines 11 to 13, and a total production number of molding products to be produced by the molding cell 10 is input thereto from the total production number input portion 74. The production number setting portion 75 sets a production number of molding products in each of the injection molding machines 11 to 13 on the basis of the total production number and the state information. In other words, the production number setting portion 75 sets a production number of molding products in other injection molding machines in accordance with a state of one injection molding machine of the injection molding machines 11 to 13. The set production number is transmitted to the operation control portion 71 of each of the injection molding machines 11 to 13. The operation control portion 71 of each of the injection molding machines 11 to 13 executes an operation of repeating a molding cycle on the basis of the set production number, and produces a molding product.

### <First Operation Example>

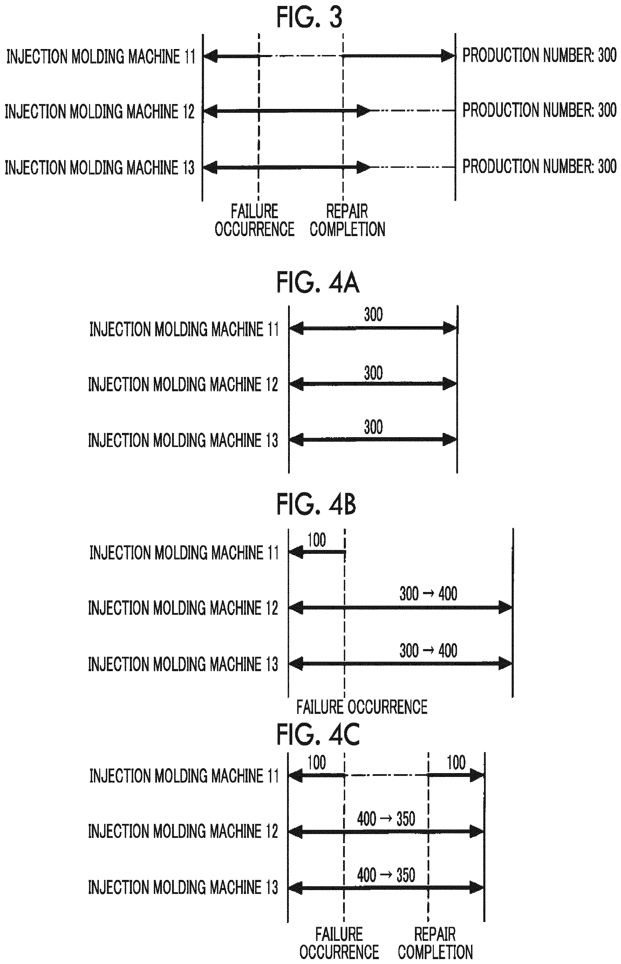

Next, a description will be made of an example of a process in the production number setting portion 75 with reference to Figs. 3 and 4A to 4C while being compared with a reference example .

Here, an injection molding machine system related to a reference example will be described. The injection molding machine system related to the reference example has the molding cell 10 including a plurality of (here, three) injection molding machines 11 to 13 in the same manner as the injection molding machine system 1 according to the embodiment illustrated in Fig. 1. Each of the injection molding machines 11 to 13 of the molding cell 10 molds a single molding product. On the other hand, the injection molding machine system related to the reference example has a difference in that a worker operates the operation unit 750 of each of the injection molding machines 11 to 13, and thus inputs a production number of molding products in each of the injection molding machines 11 to 13.

Fig. 3 illustrates an example of a time chart for the injection molding machine system related to the reference example. In Fig. 3 (the same applies to Figs. 4A to 7F which will be described later), arrows respectively correspond to the injection molding machines 11 to 13 in order from the top, and a lateral direction indicates time. A state of being currently operated of each of the injection molding machines 11 to 13 is indicated by a thick solid line. A stoppage state due to a failure or the like is indicated by a thin dot chain line.

For example, the worker inputs 300 to the injection molding machines 11 to 13 as a production number of molding products in each of the injection molding machines 11 to 13. Consequently, the operation control portion 71 of each of the injection molding machines 11 to 13 starts an operation of a molding cycle on the basis of the set production number of molding products.

Here, in a case where a failure has occurred in the injection molding machine 11, a production completion time of the injection molding machine 11 is delayed by a time from the failure occurrence to repair completion. Thus, a standby time (indicated by a thin two-dot chain line in Fig. 3) after production completion occurs in the injection molding machines 12 and 13. Therefore, the productivity of the molding cell 10 is reduced as a whole.

Alternatively, when a failure has occurred in the injection molding machine 11, the worker resets a production number of molding products in each of the injection molding machines 12 and 13 along with coping with the failure in the injection molding machine 11. Thus, the time and effort of the worker are increased, and there is concern that a setting error may occur due to the increase of the time and effort.

Figs. 4A to 4C illustrate an example of a time chart for the injection molding machine system 1 according to the embodiment.

For example, the worker inputs 900 as a total production number of molding products to be produced by the molding cell 10 to the injection molding machine 11 that is a master. The production number setting portion 75 sets a production number of molding products in each of the injection molding machines 11 to 13. Herein, as illustrated in Fig. 4A, it is assumed that the production number setting portion 75 sets 300 as a production number of molding products in each of the injection molding machines 11 to 13. Consequently, the operation control portion 71 of each of the injection molding machines 11 to 13 starts an operation of a molding cycle on the basis of the set production number of molding products.

Here, when a failure or the like has occurred in the injection molding machine 11, and thus the injection molding machine 11 is stopped before a production number reaches the set production number, the state determination portion 72 of the injection molding machine 11 transmits an operation state of the injection molding machine 11 indicating that the injection molding machine 11 is stopped due to the failure and the production number of molding products, to the production number setting portion 75 as state information. Consequently, the production number setting portion 75 resets a production number of molding products in each of the injection molding machines 11 to 13. For example, in a case where a failure has occurred in the injection molding machine 11 at the time at which each of the injection molding machines 11 to 13 produces 100 molding products, as illustrated in Fig. 4B, the production number setting portion 75 adjusts a production number of molding products in each of the injection molding machines 12 and 13 such that a total production number in the molding cell 10 is 900. For example, in the example illustrated in Fig. 4B, a production number in the injection molding machines 12 and 13 is changed from 300 to 400.

When repair of the injection molding machine 11 is completed, the state determination portion 72 of the injection molding machine 11 transmits an operation state of the injection molding machine 11 and a production number of molding products to the production number setting portion 75 as state information. The production number setting portion 75 resets a production number of molding products in each of the injection molding machines 11 to 13. For example, in a case where a failure occurs in the injection molding machine 11 at the time at which the injection molding machine 11 produces 100 molding products, and the repair of the injection molding machine 11 is completed at the time at which each of the injection molding machines 12 and 13 produces 250 molding products, as illustrated in Fig. 4C, the production number setting portion 75 adjusts a production number of molding products in the injection molding machine 11 such that a total production number in the molding cell 10 is 900, and adjusts a production number of molding products in each of the injection molding machines 12 and 13. For example, in the example illustrated in Fig. 4C, a production number in the injection molding machine 11 of which repair is completed is added with 100. In other words, a production number in the injection molding machine 11 is changed to 200 including the production number before the failure. A production number of each of the injection molding machines 12 and 13 is changed from 400 to 350.

As mentioned above, in a case where the state determination portion 72 determines that a state of at least one injection molding machine among the injection molding machines 11 to 13 is changed (for example, stoppage due to the failure occurrence or operation restarting due to repair completion), the production number setting portion 75 resets a production number of molding products in each of the injection molding machines 11 to 13.

As mentioned above, according to the injection molding machine system 1 of the embodiment, a worker inputs a total production number of molding products to be produced by the molding cell 10, and thus a production number of molding products in each of the injection molding machines 11 to 13 can be automatically set according to an operation state of each of the injection molding machines 11 to 13. Consequently, it is possible to improve the productivity of the molding cell 10 as a whole. It is possible to reduce the time and effort of a worker during the occurrence of a trouble such as a failure and thus to prevent excessive production or production shortage of molding products due to a setting error.

### <Second Operation Example>

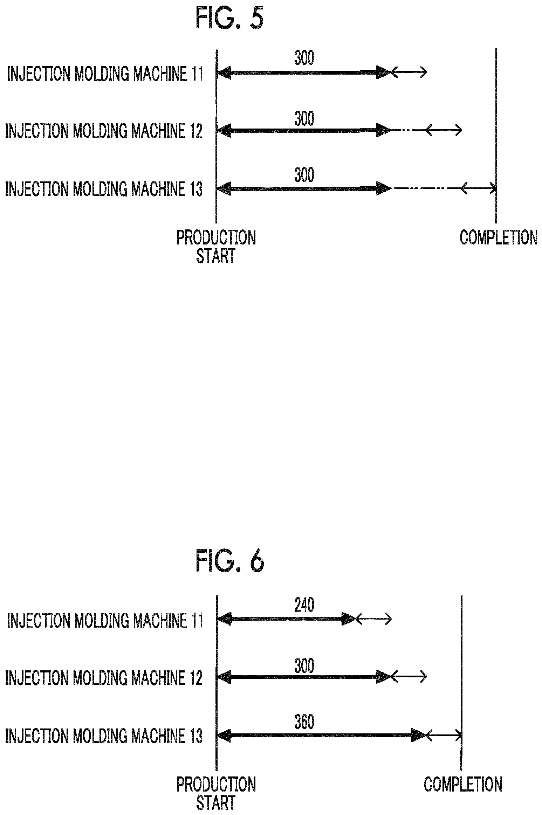

Next, a description will be made of another example of a process in the production number setting portion 75 with reference to Figs. 5 and 6 while being compared with a reference example.

Fig. 5 illustrates another example of a time chart for an injection molding machine system related to a reference example. Herein, a description will be made of a case where a worker performs preparation work for the next production after production of molding products is completed. The preparation work includes, for example, replacement of the mold unit 800 and replacement (purging) of a molding material (resin). In Fig. 5, the preparation work is indicated by a thin solid line in Fig. 5 (the same applies to Fig. 6 which will be described later).

For example, the worker inputs 300 to the injection molding machines 11 to 13 as a production number of molding products in each of the injection molding machines 11 to 13. Consequently, the operation control portion 71 of each of the injection molding machines 11 to 13 starts an operation of a molding cycle on the basis of the set production number of molding products. In this case, the injection molding machines 11 to 13 simultaneously complete production of molding products.

Next, a worker performs preparation work on the injection molding machine 11. When the preparation work on the injection molding machine 11 is completed, the worker performs preparation work on the injection molding machine 12. When the preparation work on the injection molding machine 12 is completed, the worker performs preparation work on the injection molding machine 13. Thus, a standby time (indicated by a thin two-dot chain line in Fig. 5) occurs in the injection molding machines 12 and 13 when the worker performs preparation work on other injection molding machines. Therefore, productivity of the molding cell 10 is reduced as a whole.

Fig. 6 illustrates another time chart for the injection molding machine system 1 according to the embodiment.

For example, the worker inputs 900 as a total production number of molding products to be produced by the molding cell 10 to the injection molding machine 11 that is a master. The production number setting portion 75 sets a production number of molding products in each of the injection molding machines 11 to 13. Herein, as illustrated in Fig. 6, production numbers of molding products in the respective injection molding machines 11 to 13 are set to be different from each other. In other words, production numbers of molding products in the respective injection molding machines 11 to 13 are set such that a production completion timing of a certain injection molding machine is different from production completion timings of other injection molding machines. For example, a production number in the injection molding machine 11 is set to 240, a production number in the injection molding machine 12 is set to 300, and a production number in the injection molding machine 13 is set to 360. The operation control portion 71 of each of the injection molding machines 11 to 13 starts an operation of a molding cycle on the basis of the set production number of molding products. Consequently, production completion timings of the injection molding machines 11 to 13 can be distributed, and thus the injection molding machines 11 to 13 can be sequentially stopped. Consequently, the worker sequentially performs preparation work on the injection molding machines 11 to 13 that are sequentially stopped.

A difference between a production number in the injection molding machine 11 and a production number in the injection molding machine 12 may be set on the basis of the time required for sequential preparation work in the injection molding machine 11. A difference between a production number in the injection molding machine 12 and a production number in the injection molding machine 13 may be set on the basis of the time required for sequential preparation work in the injection molding machine 12.

As mentioned above, according to the injection molding machine system 1 of the embodiment, it is possible to reduce a standby time while a worker performs preparation work on other injection molding machines and thus to improve the productivity of the molding cell 10 as a whole.

### <Third Operation Example>

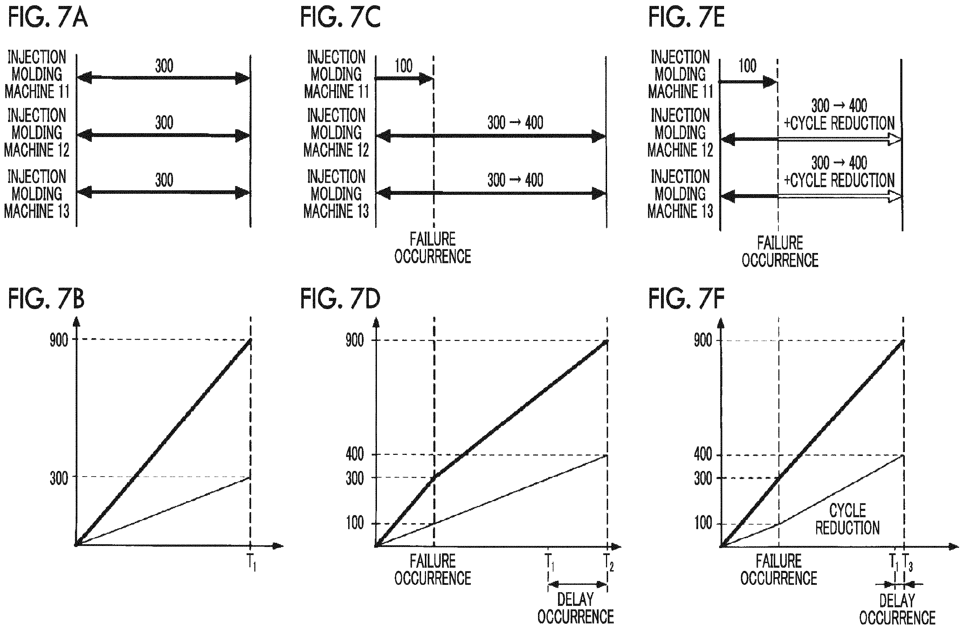

Next, a description will be made of still another example of a process in the production number setting portion 75 with reference to Figs. 7A to 7F. Figs. 7A to 7F illustrate other examples of a time chart for the injection molding machine system 1 according to the embodiment and a graph representing a change of a production number therein.

For example, the worker inputs 900 as a total production number of molding products to be produced by the molding cell 10 to the injection molding machine 11 that is a master. The production number setting portion 75 sets a production number of molding products in each of the injection molding machines 11 to 13. Herein, as illustrated in Fig. 7A, a production number of molding products in each of the injection molding machines 11 to 13 is set to 300. Fig. 7B is a graph illustrating a production number of molding products, in which a longitudinal axis expresses a production number of molding products, and a transverse axis expresses time. Aproduction number in a single injection molding machine is indicated by a thin solid line, and a production number in the whole molding cell 10 is indicated by a thick solid line. A production completion time in the molding cell 10 is indicated by T₁.

Here, when a failure or the like has occurred in the injection molding machine 11, and thus the injection molding machine 11 is stopped before a production number reaches the set production number, the state determination portion 72 of the injection molding machine 11 transmits an operation state of the injection molding machine 11 indicating that the injection molding machine 11 is stopped due to the failure and the production number of molding products therein, to the production number setting portion 75 as state information. Consequently, the production number setting portion 75 resets a production number of molding products in each of the injection molding machines 11 to 13. For example, in a case where a failure has occurred in the injection molding machine 11 at the time at which each of the injection molding machines 11 to 13 produces 100 molding products, as illustrated in Fig. 7C, the production number setting portion 75 adjusts a production number of molding products (300 → 400) in each of the injection molding machines 12 and 13 such that a total production number in the molding cell 10 is 900. Here, as illustrated in Fig. 7D, since the number of injection molding machines operated in the molding cell 10 is reduced, an increase ratio (slope) of a production number in the whole molding cell 10 indicated by the thick solid line is reduced, a production completion time becomes T₂, and thus becomes later than the original production completion time T₁.

Here, in the third operation example, in a case where a failure or the like has occurred in the injection molding machine 11, as illustrated in Fig. 7E, a cycle reduction process is performed in which the production number setting portion 75 resets a production number of molding products of each of the injection molding machines 11 to 13, the operation control portion 71 makes, for example, a mold opening speed in the injection molding machines 12 and 13 higher than in a case where a failure does not occur, and thus a molding cycle is made shorter than in the case where a failure does not occur. In Fig. 7E, a section in which the cycle reduction process is performed is indicated by a void arrow. For example, an operation speed of the mold clamping motor 160 is made higher than in a case where a failure does not occur such that times for the mold closing process, the pressure increase process, the pressure release process, and the mold opening process are reduced, and thus a molding cycle is shortened. For example, an operation speed of the drive mechanism 220 is made higher than in a case where a failure does not occur such that a time for the ejection process is reduced, and thus a molding cycle is shortened. The next process is started before a preprocess is finished, for example, the ejection process is started before the mold opening process is finished, and thus a molding cycle is shortened. A time for which a preprocess overlaps the next process is increased, and thus a molding cycle is shortened.

As mentioned above, in a case where the state determination portion 72 determines that, among the injection molding machines 11 to 13, at least one injection molding machine is stopped before a production number reaches a set production number, the production number setting portion 75 resets a production number of molding products in each of the injection molding machines 11 to 13. The operation control portion 71 controls the injection molding machines 12 and 13 such that the time required for a molding cycle is shorter than before the injection molding machine is stopped.

Consequently, as illustrated in Fig. 7F, an increase ratio (slope) of a production number in the injection molding machines 12 and 13 indicated by the thin solid line is increased. Consequently, a production completion time becomes T₃, and thus a delay can be reduced compared with the case in Fig. 7D. It is possible to improve the productivity of the whole molding cell 10.

Here, in a case where the cycle reduction process is performed, and thus an operation speed of the mold clamping motor 160 is increased, deterioration in a drive component (for example, a bushing of the toggle mechanism 150 or a ball screw of the motion conversion mechanism 170) of the toggle mechanism 150 or the like becomes faster, and thus there is concern that the life thereof is reduced. In the third operation example, a deterioration suppression process of suppressing deterioration in a drive component maybe performed along with the cycle reduction process. In the deterioration suppression process, an amount of a lubricant supplied to a drive component may be increased more than in a case where a failure does not occur (than stoppage occurs). A cooling ability of a cooler (not illustrated) cooling a drive component may be increased more than in a case where a failure does not occur (than stoppage occurs). For example, in a configuration in which a coolant is supplied to a drive component, a flow rate of a supplied coolant may be increased, or the temperature of the supplied coolant may be lowered. In a configuration in which a drive component is air-cooled, an air flow volume of an air fan may be increased. Consequently, deterioration in a drive component can be suppressed, and thus a life reduction can be suppressed.

Although not illustrated, when repair of the injection molding machine 11 is completed, the state determination portion 72 of the injection molding machine 11 transmits an operation state of the injection molding machine 11 and the production number of molding products therein, to the production number setting portion 75 as state information. The production number setting portion 75 may reset a production number of molding products of each of the injection molding machines 11 to 13, and may also shorten a molding cycle in each of the injection molding machines 11 to 13. Consequently, it is possible to further reduce a delay of production in the molding cell 10 in which a failure has occurred.

As mentioned above, the embodiment or the like of the injection molding machine has been described, but the present invention is not limited to the embodiment or the like, and may be variously modified or altered within the scope of the present invention disclosed in the claims.

In the third operation example, in the molding cell 10 including a plurality of injection molding machines 11 to 13, a description has been made of a case where, when a failure has occurred in the injection molding machine 11, molding cycles of the remaining injection molding machines 12 ad 13 are shortened, but there is no limitation thereto. For example, in a configuration in which the single injection molding machine 11 is provided, in a case where a failure has occurred in the injection molding machine 11, a molding cycle in the injection molding machine 11 may be shortened after repair of the injection molding machine 11 is completed. Consequently, it is possible to reduce a delay of production in the injection molding machine 11 in which a failure has occurred.

The production number setting portion 75 may perform control through combination of the first operation example and the second operation example. The production number setting portion 75 may perform control through combination of the second operation example and the third operation example.

In the first operation example, a description has been made of a case where, when an injection molding machine is stopped due to a failure or repair of the injection molding machine is completed, that is, when an operation state of the injection molding machine changes, a production number of molding products in each injection molding machine is reset, but there is no limitation thereto . When a state of an injection molding machine changes, a production number of molding products in each injection molding machine may be reset.

For example, when a production state of an injection molding machine changes, a production number of molding products in each injection molding machine may be reset.

Here, the change in a state of an injection molding machine may be determined, for example, through comparison with a reference value . For example, when there is an injection molding machine in which a yield is reduced, a production number of molding products in each injection molding machine may be reset. Specifically, in a certain injection molding machine, in a case where there are many defective molding products, and thus a production number in the current state is deviated from a predicted production number at the present time by a predetermined number or more, the production number may be distributed to other injection molding machines. For example, in a case where non-defective products cannot be produced within a predetermined time, the production number is distributed to other injection molding machines. Consequently, it is possible to improve the productivity of the molding cell 10 as a whole.

The change in a state of an injection molding machine may be determined, for example, through comparison with other injection molding machines in the molding cell 10. For example, a non-defective product ratio of each injection molding machine of the molding cell 10 is obtained, and, in a case where a non-defective product ratio of a certain injection molding machine is deviated from non-defective product ratios of other injection molding machines by a predetermined value or greater, a production number of molding products in each injection molding machine may be reset.

When a production number of molding products in each injection molding machine is reset, a production number in an injection molding machine of which a non-defective product ratio is low may be distributed to other injection molding machines. The distribution of a production number is performed by taking into consideration the productivity of the whole molding cell 10. For example, injection molding machines may be classified into an injection molding machine having a high non-defective product ratio, an injection molding machine having a normal non-defective product ratio, and an injection molding machine having a low non-defective product ratio, according to a non-defective product ratio, a production number in the injection molding machine having a low non-defective product ratio may be reduced, a production number in the injection molding machine having a high non-defective product ratio may be increased, and a production number in the injection molding machine having a normal non-defective product ratio may not be changed.

Regarding the change in a state of an injection molding machine, when a state of the injection molding machine changes not only in a unpreferable direction but also in a preferable direction, a production number of molding products in each injection molding machine may be reset.

For example, a production number in another injection molding machine maybe distributed to an injection molding machine having a high non-defective product ratio. For example, a production number in an injection molding machine having a normal non-defective product ratio may be reduced, and a production number in an injection molding machine having a high non-defective product ratio may be increased. Consequently, the time required for production completion in the whole molding cell 10 can be reduced, and thus it is possible to improve productivity.

In a case where even an injection molding machine having a low non-defective product ratio recovers a normal non-defective product ratio, a production number of molding products in each injection molding machine may be reset. Forexample, a production number in an injection molding machine recovering a non-defective product ratio may be increased, and production numbers in other injection molding machine may be reduced. Consequently, loads on other injection molding machines can be reduced, the time required for production completion in the whole molding cell 10 can be reduced, and thus it is possible to improve productivity.

A description has been made of a case where a non-defective product ratio is used as a production state as an example, but there is no limitation thereto. As a production state, for example, a production number (the number of completed molding products or the number of uncompleted molding products).

The quality of a molding product may be determined in each of the injection molding machines 11 to 13, may be determined in an inspector (not illustrated) in a postprocess, and may be determined on the basis of both results therein.

In a case where the quality of a molding product is determined in each of the injection molding machines 11 to 13, for example, the quality may be determined by monitoring a detection value of a sensor in a molding process. Among a measurement time, an injection pressure, mold clamping force, and the like, in a case where a predetermined monitoring item is within an allowable range, a molding product is determined as being a non-defective product, and, in a case where the monitoring item is not within the allowable range, a molding product is determined as being a defective product. In this case, the state determination portion 72 of each of the injection molding machines 11 to 13 transmits yield information to the production number setting portion 75 of the injection molding machine 11 as state information.

In a case where the quality of a molding product is determined in an inspector in a postprocess, for example, the molding product is imaged by, for example, a camera, and the quality thereof is determined. For example, an ejection machine (not illustrated) receives a molding product from the mold unit 800, and moves the molding product to the camera of the inspector. The inspector images the molding product with the camera, and determines the quality thereof. In this case, the inspector transmits yield information of each of the injection molding machines 11 to 13 to the production number setting portion 75 of the injection molding machine 11 as state information. A molding product determined as being a non-defective product is placed on a conveyor (not illustrated) , and is sent to a further postprocess.

For example, when a machine state of an injection molding machine changes, a production number of molding products in each injection molding machine may be reset.

An injection molding machine includes at least one of a life calculation portion that calculates a residual life of a constituent component and a life estimation portion that estimates a residual life of a constituent component. The life estimation portion or the life calculation portion may be provided in each injection molding machine, and may be provided in any one of injection molding machines of the molding cell 10. As a method of calculating a residual life in the life calculation portion or a method of estimating a residual life in the life estimation portion, a well-known method may be used.

For example, in a case where a residual life of a constituent component of a certain injection molding machine is equal to or less than a reference value, or a residual life of a constituent component of a certain injection molding machine is deviated by a predetermined value or greater compared with a residual life of the constituent component of other injection molding machines of the molding cell 10, a production number of molding products in each injection molding machine may be reset. Specifically, a production number in an injection molding machine having a short residual life may be distributed to other injection molding machines. Consequently, it is possible to improve the productivity of the molding cell 10 as a whole.

### Brief Description of the Reference Symbols

- 1: INJECTION MOLDING MACHINE SYSTEM
- 10: MOLDING CELL
- 11 TO 13: INJECTION MOLDING MACHINE
- 20: NETWORK
- 71: OPERATION CONTROL PORTION
- 72: STATE DETERMINATION PORTION
- 73: COMMUNICATION PORTION
- 74: TOTAL PRODUCTION NUMBER INPUT PORTION
- 75: PRODUCTION NUMBER SETTING PORTION
- 100: MOLD CLAMPING UNIT
- 110: STATIONARY PLATEN
- 120: MOVABLE PLATEN
- 130: TOGGLE SUPPORT
- 140: TIE BAR
- 150: TOGGLE MECHANISM
- 151: CROSS HEAD
- 160: MOLD CLAMPING MOTOR
- 170: MOTION CONVERSION MECHANISM
- 180: MOLD THICKNESS ADJUSTMENT MECHANISM
- 200: EJECTOR UNIT
- 210: EJECTOR ROD
- 220: DRIVE MECHANISM
- 300: INJECTION UNIT
- 400: MOVEMENT UNIT
- 700: CONTROL UNIT
- 701: CENTRAL PROCESSING UNIT (CPU)
- 702: STORAGE MEDIUM
- 703: INPUT INTERFACE
- 704: OUTPUT INTERFACE
- 750: OPERATION UNIT
- 760: DISPLAY UNIT
- 800: MOLD UNIT
- 801: CAVITY SPACE
- 810: STATIONARY MOLD
- 820: MOVABLE MOLD
- 830: MOVABLE MEMBER
- 900: FRAME

## Claims

1. An injection molding machine system (1) having a molding cell (10) including a plurality of injection molding machines (11, 12, 13), the injection molding machine system (1) comprising:
a total production number input portion (74) configured to receive input of a total production number of molding products to be produced by the molding cell (10);
a production number setting portion (75) configured to set a production number of molding products in each of the injection molding machines (11, 12, 13) on the basis of the total production number;
a state determination portion (72) configured to determine a state of the injection molding machine (11, 12, 13); and
an operation control portion (71) configured to control an operation of the injection molding machine (11, 12, 13),
**characterized in that**
the production number setting portion (75) is configured to set a production number of molding products in each of the injection molding machines (11, 12, 13) on the basis of the state of the injection molding machine (11, 12, 13),
the production number setting portion (75) is configured to reset a production number of molding products in each of the injection molding machines (11, 12, 13) in a case where the state determination portion (72) determines that a state of at least one injection molding machine (11, 12, 13) among the plurality of injection molding machines (11, 12, 13) is changed, and
the operation control portion (71) is configured to perform a cycle reduction process of controlling the injection molding machine (11, 12, 13) such that a time required for one molding cycle is shorter than before the injection molding machine (11, 12, 13) is stopped in a case where a production number after resetting is greater than a production number before resetting.

2. The injection molding machine system (1) according to claim 1,
wherein the production number setting portion (75) is configured to set a production number of molding products in each of the injection molding machines (11, 12, 13) such that a standby time of the injection molding machine (11, 12, 13) is reduced.

3. The injection molding machine system (1) according to claim 1,
wherein the operation control portion (71) is configured to perform the cycle reduction process, and also perform a deterioration suppression process of suppressing deterioration in a drive component of the injection molding machine (11, 12, 13) .

4. The injection molding machine system (1) according to claim 3,
wherein, as the deterioration suppression process, the operation control portion (71) is configured to increase an amount of a lubricant supplied to the drive component of the injection molding machine (11, 12, 13) to more than before the injection molding machine (11, 12, 13) is stopped.

5. The injection molding machine system (1) according to claim 3 or 4,
wherein, as the deterioration suppression process, the operation control portion (71) is configured to increase a cooling ability of a cooler cooling the drive component of the injection molding machine (11, 12, 13) to more than before the injection molding machine (11, 12, 13) is stopped.

6. An injection molding machine system (1) having a molding cell (10) including a plurality of injection molding machines (11, 12, 13), the injection molding machine system (1) comprising:
a total production number input portion (74) configured to receive input of a total production number of molding products to be produced by the molding cell (10);
a production number setting portion (75) configured to set a production number of molding products in each of the injection molding machines (11, 12, 13) on the basis of the total production number; and
a state determination portion (72) configured to determine a state of the injection molding machine (11, 12, 13),
**characterized in that**
the production number setting portion (75) is configured to set a production number of molding products in each of the injection molding machines (11, 12, 13) on the basis of the state of the injection molding machine (11, 12, 13), and
the production number setting portion (75) is configured to set a production number of molding products in each of the injection molding machines (11, 12, 13) such that a production completion timing in one injection molding machine (11, 12, 13) is different from a production completion timing in another injection molding machine (11, 12, 13).

## Patentansprüche

1. Spritzgießmaschinensystem (1) mit einer Formzelle (10), die mehrere Spritzgießmaschinen (11, 12, 13) umfasst, wobei das Spritzgießmaschinensystem (1) umfasst:
einen Gesamtproduktionsanzahl-Eingabeabschnitt (74), der konfiguriert ist, Eingabe einer Gesamtproduktionsanzahl von Formerzeugnissen zu empfangen, die von der Formzelle (10) hergestellt werden sollen;
einen Produktionsanzahl-Einstellabschnitt (75), der konfiguriert ist, eine Produktionsanzahl von Formerzeugnissen in jeder der Spritzgießmaschinen (11, 12, 13) auf Grundlage der Gesamtproduktionsanzahl einzustellen;
einen Zustandsbestimmungsabschnitt (72), der konfiguriert ist, einen Zustand der Spritzgießmaschine (11, 12, 13) zu bestimmen; und
einen Betriebssteuerungsabschnitt (71), der konfiguriert ist, einen Betrieb der Spritzgießmaschine (11, 12, 13) zu steuern,
**dadurch gekennzeichnet, dass**
der Produktionsanzahl-Einstellabschnitt (75) konfiguriert ist, auf Grundlage des Zustands der Spritzgießmaschine (11, 12, 13) in jeder der Spritzgießmaschinen (11, 12, 13) eine Produktionsanzahl von Formerzeugnissen einzustellen;
der Produktionsanzahl-Einstellabschnitt (75) konfiguriert ist, eine Produktionsanzahl von Formerzeugnissen in jeder der Spritzgießmaschinen (11, 12, 13) in einem Fall zurückzusetzen, bei dem der Zustandsbestimmungsabschnitt (72) bestimmt, dass ein Zustand von zumindest einer Spritzgießmaschine (11, 12, 13) unter den mehreren Spritzgießmaschinen (11, 12, 13) verändert ist, und
der Betriebssteuerungsabschnitt (71) konfiguriert ist, einen Zyklusverringerungsprozess zum Steuern der Spritzgießmaschine (11, 12, 13) derart durchzuführen, dass eine für einen Formzyklus benötigte Zeit kürzer ist als bevor die Spritzgießmaschine (11, 12, 13) in einem Fall gestoppt wird, in dem eine Produktionsanzahl nach Zurücksetzen größer ist als eine Produktionsanzahl vor Zurücksetzen.

2. Spritzgießmaschinensystem (1) nach Anspruch 1,
wobei der Produktionsanzahl-Einstellabschnitt (75) konfiguriert ist, eine Produktionsanzahl von Formerzeugnissen in jeder der Spritzgießmaschinen (11, 12, 13) derart einzustellen, dass eine Standby-Zeit der Spritzgießmaschine (11, 12, 13) verringert ist.

3. Spritzgießmaschinensystem (1) nach Anspruch 1,
wobei der Betriebssteuerungsabschnitt (71) konfiguriert ist, den Zyklusverringerungsprozess durchzuführen, und auch einen Verschlechterungsunterdrückungsprozess zum Unterdrücken von Verschlechterung in einer Antriebskomponente der Spritzgießmaschine (11, 12, 13) durchzuführen.

4. Spritzgießmaschinensystem (1) nach Anspruch 3,
wobei, als der Verschlechterungsunterdrückungsprozess, der Betriebssteuerungsabschnitt (71) konfiguriert ist, eine Menge eines an die Antriebskomponente der Spritzgießmaschine (11, 12, 13) zugeführten Schmiermittels auf mehr zu erhöhen als bevor die Spritzgießmaschine (11, 12, 13) gestoppt wird.

5. Spritzgießmaschinensystem (1) nach Anspruch 3 oder 4,
wobei, als Verschlechterungsunterdrückungsprozess, der Betriebssteuerungsabschnitt (71) konfiguriert ist, eine Kühlleistung einer Kühlvorrichtung, welche die Antriebskomponente der Spritzgießmaschine (11, 12, 13) kühlt, auf mehr zu erhöhen als bevor die Spritzgießmaschine (11, 12, 13) gestoppt wird.

6. Spritzgießmaschinensystem (1) mit einer Formzelle (10), die mehrere Spritzgießmaschinen (11, 12, 13) umfasst, wobei das Spritzgießmaschinensystem (1) umfasst:
einen Gesamtproduktionsanzahl-Eingabeabschnitt (74), der konfiguriert ist, Eingabe einer Gesamtproduktionsanzahl von Formerzeugnissen zu empfangen, die von der Formzelle (10) hergestellt werden sollen;
einen Produktionsanzahl-Einstellabschnitt (75), der konfiguriert ist, eine Produktionsanzahl von Formerzeugnissen in jeder der Spritzgießmaschinen (11, 12, 13) auf Grundlage der Gesamtproduktionsanzahl einzustellen; und
einen Zustandsbestimmungsabschnitt (72), der konfiguriert ist, einen Zustand der Spritzgießmaschine (11, 12, 13) zu bestimmen,
**dadurch gekennzeichnet, dass**
der Produktionsanzahl-Einstellabschnitt (75) konfiguriert ist, eine Produktionsanzahl von Formerzeugnissen in jeder der Spritzgießmaschinen (11, 12, 13) auf Grundlage des Zustands der Spritzgießmaschine (11, 12, 13) einzustellen, und
der Produktionsanzahl-Einstellabschnitt (75) konfiguriert ist, eine Produktionsanzahl von Formerzeugnissen in jeder der Spritzgießmaschinen (11, 12, 13) derart einzustellen, dass sich ein Produktionsabschlusszeitpunkt in einer Spritzgießmaschine (11, 12, 13) von einem Produktionsabschlusszeitpunkt in einer anderen Spritzgießmaschine (11, 12, 13) unterscheidet.

## Revendications

1. Un système de machines de moulage par injection (1) ayant une cellule de moulage (10) incluant une pluralité de machines de moulage par injection (11, 12, 13), le système de machines de moulage par injection (1) comprenant :
une partie d'entrée de numéro total de production (74) configurée de manière à recevoir une entrée d'un numéro total de production de produits de moulage devant être produits par la cellule de moulage (10) ;
une partie de définition de numéro de production (75) configurée de manière à définir un numéro de production de produits de moulage dans chacune des machines de moulage par injection (11, 12, 13) sur la base du numéro total de production ;
une partie de détermination d'état (72) configurée de manière à déterminer un état de la machine de moulage par injection (11, 12, 13) ; et
une partie de commande d'opération (71) configurée de manière à commander une opération de la machine de moulage par injection (11, 12, 13) ;
**caractérisé en ce que** :
la partie de définition de numéro de production (75) est configurée de manière à définir un numéro de production de produits de moulage dans chacune des machines de moulage par injection (11, 12, 13), sur la base de l'état de la machine de moulage par injection (11, 12, 13) ;
la partie de définition de numéro de production (75) est configurée de manière à réinitialiser un numéro de production de produits de moulage dans chacune des machines de moulage par injection (11, 12, 13), dans un cas où la partie de détermination d'état (72) détermine qu'un état d'au moins une machine de moulage par injection (11, 12, 13), parmi la pluralité de machines de moulage par injection (11, 12, 13), est modifié ; et
la partie de commande d'opération (71) est configurée de manière à mettre en œuvre un processus de réduction de cycle consistant à commander la machine de moulage par injection (11, 12, 13) de sorte qu'un temps requis pour un cycle de moulage est plus court qu'avant l'arrêt de la machine de moulage par injection (11, 12, 13) dans le cas où un numéro de production après réinitialisation est supérieur à un numéro de production avant réinitialisation.

2. Le système de machines de moulage par injection (1) selon la revendication 1,
dans lequel la partie de définition de numéro de production (75) est configurée de manière à définir un numéro de production de produits de moulage dans chacune des machines de moulage par injection (11, 12, 13), de sorte qu'un temps de veille de la machine de moulage par injection (11, 12, 13) est réduit.

3. Le système de machines de moulage par injection (1) selon la revendication 1,
dans lequel la partie de commande d'opération (71) est configurée de manière à mettre en œuvre le processus de réduction de cycle, et également à mettre en œuvre un processus de suppression de détérioration consistant à supprimer une détérioration dans un composant d'entraînement de la machine de moulage par injection (11, 12, 13).

4. Le système de machines de moulage par injection (1) selon la revendication 3,
dans lequel, dans le cadre du processus de suppression de détérioration, la partie de commande d'opération (71) est configurée de manière à augmenter une quantité d'un lubrifiant, fournie au composant d'entraînement de la machine de moulage par injection (11, 12, 13), jusqu'à une quantité supérieure à une quantité existant avant l'arrêt de la machine de moulage par injection (11, 12, 13).

5. Le système de machines de moulage par injection (1) selon la revendication 3 ou 4,
dans lequel, dans le cadre du processus de suppression de détérioration, la partie de commande d'opération (71) est configurée de manière à augmenter une capacité de refroidissement d'un refroidisseur refroidissant le composant d'entraînement de la machine de moulage par injection (11, 12, 13), jusqu'à une capacité supérieure à une capacité existant avant l'arrêt de la machine de moulage par injection (11, 12, 13).

6. Le système de machines de moulage par injection (1) présentant une cellule de moulage (10) incluant une pluralité de machines de moulage par injection (11, 12, 13), le système de machines de moulage par injection (1) comprenant :
une partie d'entrée de numéro total de production (74) configurée de manière à recevoir une entrée d'un numéro total de production de produits de moulage devant être produits par la cellule de moulage (10) ;
une partie de définition de numéro de production (75) configurée de manière à définir un numéro de production de produits de moulage dans chacune des machines de moulage par injection (11, 12, 13) sur la base du numéro total de production ; et
une partie de détermination d'état (72) configurée de manière à déterminer un état de la machine de moulage par injection (11, 12, 13),
**caractérisé en ce que** :
la partie de définition de numéro de production (75) est configurée de manière à définir un numéro de production de produits de moulage dans chacune des machines de moulage par injection (11, 12, 13) sur la base de l'état de la machine de moulage par injection (11, 12, 13) ; et
la partie de définition de numéro de production (75) est configurée de manière à définir un numéro de production de produits de moulage dans chacune des machines de moulage par injection (11, 12, 13), de sorte qu'une temporisation d'achèvement de production dans une machine de moulage par injection (11, 12, 13) est différente d'une temporisation d'achèvement de production dans une autre machine de moulage par injection (11, 12, 13).
